# EUROPEAN PATENT SPECIFICATION

(11) **EP 1 661 127 B1**
(45) Date of publication and mention of the grant of the patent: **16.01.2008**
(21) Application number: 04744825.3
(22) Date of filing: 24.08.2004
(51) Int. Cl.: G11B 7/08, G11B 7/085, G11B 17/04, G11B 21/08, G11B 25/04

(54) **DRIVE FOR DISC SHAPED OPTICAL DATA CARRIER**
LAUFWERK FÜR EINEN SCHEIBENFÖRMIGEN OPTISCHEN DATENTRÄGER
LECTEUR POUR SUPPORT DE DONNEES OPTIQUES DISCOIDE

(30) Priority: 26.08.2003 EP 03102653
(43) Date of publication of application: 31.05.2006
(73) Proprietor: Koninklijke Philips Electronics N.V., 5621 BA Eindhoven (NL)
(72) Inventor: EBERDORFER, Wolfgang, A-1101 Vienna (AT)
(74) Representative: Damen, Daniel Martijn
(86) International application number: PCT/IB2004/051544
(87) International publication number: WO 2005/020218

(56) References cited:
- US-A- 6 151 284
- US-A1- 2001 030 931

## Description

The invention relates to a drive for a disc-shaped optical data carrier with a motherboard on which motherboard electronic components for controlling drive functions are arranged, and with a data carrier drive motor for rotating driving of the data carrier and with an optical scanning unit for scanning the data carrier.

The invention further relates to a consumer electronics (CE) appliance with a drive according to the type presented in the first paragraph.

The invention further relates to a method of carrying, guiding and displacing an optical scanning unit in a drive for a disc-shaped optical data carrier, said drive comprising a motherboard on which motherboard electronic components for the control of drive functions are arranged, and a data carrier drive motor for rotating driving of the data carrier and the optical scanning unit for scanning the data carrier.

Conventional drives for a disc-shaped optical data carrier, such as CD, CD-ROM or DVD, contain a chassis and a drive device and a scanning device for the data carrier and at least one motherboard, on which motherboard there are electronic elements and electronic components for controlling the drive. Said motherboard is often also called a circuit board and a carrying plate or retaining plate. The scanning device for the disc-shaped data carrier comprises an optical scanning unit, that in technical circles is also often called an optical pick-up unit (OPU) and that contains an optical system for scanning the data carrier. The optical scanning device is carried movably on a carriage, which is held movably on the chassis. The chassis also serves for mounting various electromechanical components for drive and displacement of the carriage. In addition, a data carrier drive motor of the drive device for rotating driving of the disc-shaped data carrier is arranged on the chassis. The optical scanning unit carries all the necessary components for scanning the optical data carrier, such as a laser beam source, various mirrors and lenses, a photodetector, actuators for focusing the laser beam onto the data track of the data carrier and for tracking the laser beam along the data track. Usually a driver circuit for the laser and a signal processor for the photodetector are also housed in the optical scanning device. These electrical components are generally arranged on a flat foil, which serves as a flexible printed circuit board and at the same time creates a flexible connection to the control electronics located outside the optical scanning device. The whole assembly of chassis and scanning device is termed CD/DVD mechanism by engineering specialists, for which the abbreviation CDM/DVDM is used, and this will also be used in the present description. The CDM/DVDM forms, together with a drawer that is provided as transporting means, which is provided for holding a data carrier and for transporting the data carrier into the drive and for transporting the data carrier out of the drive, and the mechanism provided for driving the drawer and a main motherboard (main board), the aforementioned drive, which is also termed "basic engine". On the main motherboard there is a controller for the basic control functions of the "basic engine", some driver circuits for servo motors and actuators, a DVD/CD decoder and an error correcting logic circuit, and in the case of a drive suitable for writing on the data carrier, circuits for coding an incoming data stream into a data signal suitable for writing, depending on the type of recordable optical data carrier.

A drive of this kind is known from document US 2001/0030926 A1 reflecting the preamble of the independent claims. A disadvantage of the known drive is that because of the many individual parts it is difficult to construct a device with a small overall height. The large number of individual parts is also problematic during manufacture, because as well as the actual assembly steps it is also necessary to carry out numerous adjustment steps, to align the individual parts with one another. Furthermore, wiring of the various modules to one another causes problems, both with respect to the required space and with respect to the electrical reliability of the wiring, because several of the modules that are wired together are moved relative to one another during operation. Similar disc drivers are known from US 2001/030931A1 or from US 6 151 284 A.

It may be mentioned that the construction of a DVD/CD player/recorder as a stand-alone unit requires, in addition to the "basic engine", further components such as a power supply unit, an input/output (I/O) board with audio digital analog converters and a tuner for a recorder function. Furthermore, a so-called "backend" or digital motherboard (board) is required, which includes the circuits for coding and decoding the entire digital data stream. Finally, a front plate is also to be provided, which carries the controls and indications. It is understandable that the increased number of modules intensifies the problem of required space, and expensive assembly and wiring.

The problem to be solved by the invention is to create a drive for a disc-shaped optical data carrier according to the type stated in the first paragraph, a consumer electronics (CE) appliance according to the type stated in the second paragraph, and a method of carrying, guiding and displacing an optical scanning unit in a drive for a disc-shaped optical data carrier according to the type stated in the third paragraph, in which the aforementioned disadvantages are avoided.

To solve the problem stated above, in a drive according to the invention, features according to the invention are provided, so that a drive according to the invention can be characterized as follows:

Drive for a disc-shaped optical data carrier with a motherboard on which motherboard electronic components for controlling drive functions are arranged, and with a data carrier drive motor for rotating driving of the data carrier, and with an optical scanning unit for scanning the data carrier, wherein the motherboard is provided for carrying the optical scanning unit and wherein the optical scanning unit is adjustably held on the motherboard.

To solve the problem stated above, a drive according to the invention is provided in a consumer electronics appliance of this kind.

To solve the problem stated above, in a method according to the invention, features according to the invention are provided, so that a method according to the invention can be characterized as follows:

Method of carrying, guiding and displacing an optical scanning unit in a drive for a disc-shaped optical data carrier into a drive for the optical data carrier, said drive comprising a motherboard on which motherboard electronic components for controlling drive functions are arranged, and a data carrier drive motor for rotating driving of the data carrier and the optical scanning unit for scanning the data carrier, which method in the optical scanning unit is carried by means of the motherboard and the optical scanning unit is adjusted on the motherboard and is guided by means of the motherboard in the motion of adjustment.

As a result of the features according to the invention, the number of components is reduced relative to conventional appliances. In particular the number of connecting means required is reduced, which contributes to weight reduction and to higher operational reliability. Furthermore, fewer mechanical parts are required than in appliances of the state of the art, and assembly of the entire drive can be automated using robots. Finally, as a result of the features according to the invention, it is possible to achieve a smaller overall height of the drive than with known drives.

According to the measures in claims 2 and 14, the advantage is obtained that the required number of components is minimized and relatively few adjustment steps have to be carried out. Forming of the recess or opening can be automated at the motherboard manufacturing stage and can be effected with a high degree of precision.

According to the measures of claims 3 and 15, the advantage is obtained that the edges of the motherboard are not worn, and there is a constant, low resistance to sliding.

According to the measures of claim 4, the advantage is obtained that the edge protection is relatively easy to manufacture and can be joined to the motherboard in a relatively uncomplicated manner.

According to the measures of claims 5 and 16, the advantage is obtained that the optical scanning unit can be guided with relatively high accuracy.

According to the measures of claim 6, the advantage is obtained that the bearing or position of the optical scanning unit is adjustable.

According to the measures of claim 7, the advantage is obtained that a relatively high operational reliability is obtained with respect to flexible electrical connections.

According to the measures of claims 8 and 17, the advantage is obtained that a relatively compact and also robust construction of the scanning unit is obtained.

According to the measures of claims 9 and 18, the advantage is obtained that the electrical connection thus created between the optical scanning unit and the motherboard can be utilized for electrical supply of the optical scanning unit. The good electrical connection between the optical scanning unit and the motherboard can also serve for improved grounding of the optical scanning unit on a grounding surface of the motherboard and thus helps to alleviate EMC, EMI and ESD problems. The good thermal connection between the optical scanning unit and the motherboard also serves for abstracting heat from the optical scanning unit to the motherboard, for example by providing a grounding surface covering a large area on the top and/or on the underside of the motherboard, so that the motherboard acts as a heat sink for the optical scanning unit.

According to the measures of claims 10 and 19, the advantage of simpler manufacture of the drive and of a further reduction of the number of components is obtained.

According to the measures of claims 11 and 20, the advantage is obtained that compared with conventional appliances, one motor can be saved, which represents a relatively large saving on the material costs.

It should be mentioned that also in the case of a CE appliance according to claim 12 the measures stated in connection with the drive are envisaged according to one of the claims 2 to 11 and accordingly the advantages stated in the case of the drive are also of benefit with such a CE appliance.

These and other aspects of the invention are apparent from and will be elucidated with reference to the embodiments described hereinafter.

The invention will be described below with reference to three embodiments represented in the drawings, but the invention is not limited to these.
Fig. 1 shows a schematic, perspective view of a drive according to the invention with disc-shaped optical data carrier transported into the drive according to a first embodiment of the invention.
Fig. 2 shows, in a similar manner to Fig. 1, the drive according to Fig. 1 with a disc-shaped optical data carrier transported out of the drive.
Fig. 3 shows, in a similar manner to Fig. 1, details of the drive relevant to the invention according to a second embodiment of the invention.
Fig. 4 shows, in a similar manner to Fig. 4, details of the drive relevant to the invention according to a third embodiment of the invention.

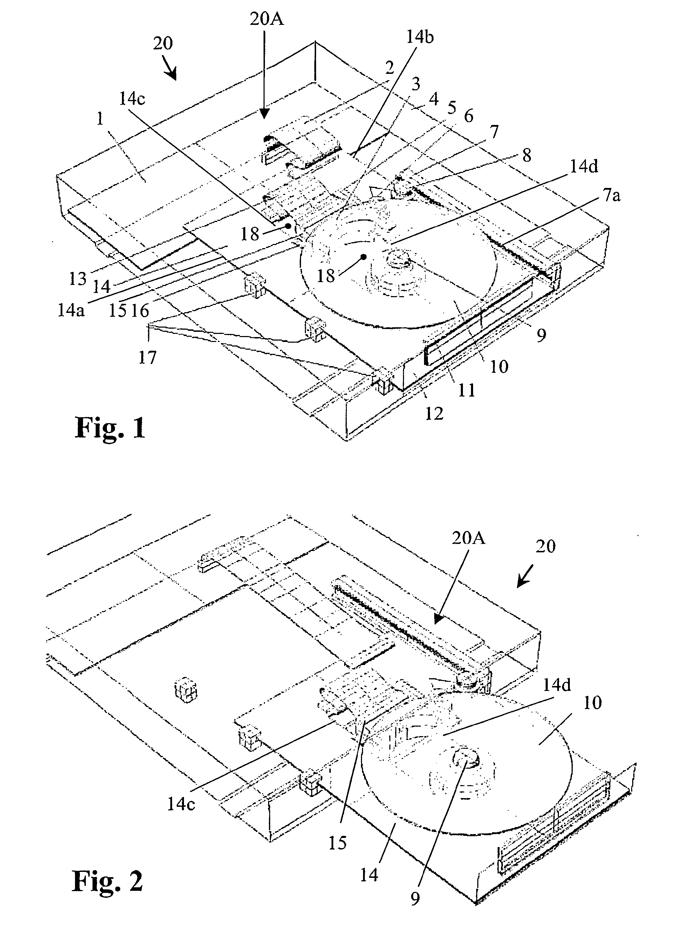

Fig. 1 shows a drive 20A according to the invention for a disc-shaped optical data carrier 10, said drive 20A being built into a CD/DVD player/recorder 20 in the present embodiment. The CD/DVD player/recorder 20 contains motherboards for electronic and electrical elements and components, said motherboards being designated as boards hereinafter. An I/O board 1 is provided, on which there are (not shown in detail): input/output connectors, audio-digital/analog converters and a tuner for a recorder function. The I/O board 1 is fixed in a housing 4. The I/O board 1 communicates via a flat cable 2 with a main board 14, which comprises both the circuits of conventional "backend" boards, i.e. circuits for the coding and decoding of the entire digital data stream, and the electronic modules of the "basic engine", such as a controller for the basic control functions of the "basic engine", driver circuits for servo motors and actuators, a DVD/CD decoder and an error correction logic circuit, and circuits for coding an incoming data stream into a suitable write signal for writing on the data carrier 10 for the recorder function. By means of the main board 14, transporting means are achieved, which are designed for holding the data carrier 10 and for the transporting of the data carrier 10 into the drive 20A and for transporting it out of the drive 20A. Accordingly, the known function in conventional appliances, of a drawer for carrying or holding the data carrier 10 and for transporting the data carrier 10 is accomplished by means of the main board 14. For this purpose the main board 14 has sliding support in housing 4, so that it can be moved out of housing 4 and back into housing 4. The sliding support for guiding the main board 14 in its translational motion for inserting or ejecting the optical data carrier 10 is provided by sliding bearing blocks 17, which engage with or encircle a longitudinal edge 14a of the main board, and a guide rail 7, in which the opposite longitudinal edge 14b of the main board 14 is guided. The guide rail 7 comprises a stationary toothed rack 7a, which engages with a pinion mounted on the drive shaft of a disc drive motor 8. It should be mentioned at this point that instead of the sliding bearing blocks 17 it is also possible to provide rollers or wheels as the supporting means, between which the motherboard 14 or main board 14 is guided. Bearings with a magnetic action are also conceivable.

The disc drive motor 8 is secured to the main board 14 directly and soldered to its connecting terminals, so that no separate connecting wires are required for the disc drive motor 8. When the disc drive motor 8 operates, depending on its direction of rotation the main board 14 slides out of housing 4 or back into housing 4. As an alternative to a rack-and-pinion mechanism, drive motor 8 can also drive the main board 14 by means of a worm gear mechanism. It should be mentioned that it is also possible to provide a belt drive or a mechanism which, when moving the main board 14 out of the appliance 20, overcomes the restoring force of a spring acting upon the main board 14. Since the main board 14 is constructed as a multilayer board with typically four to six layers, because of the numerous highly integrated electronic components that are located on it, with each layer as a rule consisting of a copper foil, which is carried by an epoxy resin carrier, and all layers are laminated together, the main board 14 has excellent bending and torsional strength and is, owing to these excellent mechanical properties, eminently suitable as the transporting means for holding and transporting the optical data carrier 10. By using the main board 14 as the transporting means, we are not required to provide a separate transporting means and its bearings, so that compared with known appliances, a relatively large reduction in material costs and cost of assembly can be achieved.

It should be mentioned that the length of the flat cable 2 between the I/O board 1 and the main board 14 is dimensioned so that the flat cable 2 cannot cause any restriction of the movement of the main board 14.

Although it would theoretically be possible to arrange the components of the I/O board 1 on the main board 14 as well, on grounds of cost this is not preferred. Since the main board 14 contains many highly integrated (LSI) circuits, whose electrical interconnection can only be achieved with a multilayer board, the price per unit area of this main board 14 is relatively high. On the other hand, large-area components, such as plugs or sockets, are arranged on the I/O board 1, but they have few connecting legs, so that an inexpensive single-layer board is sufficient for their wiring. Moreover, this still does not avoid fixing sockets etc. on the housing, which can be effected easily by means of the I/O board 1.

On the side of the main board 14 facing the front of the CD/DVD player/recorder 20, a vertical display 11 is soldered rigidly to the main board 14. This display 11 serves for indicating the essential functions of the CD/DVD player/recorder 20 and generally comprises an integrated display controller for controlling the display. Soldering the display 11 directly on the main board 14 once again saves an electrical connecting means, such as an edge connector or a flat cable, as is quite possibly required in conventional appliances in which the display is mounted on the front panel of the CD/DVD player/recorder and communicates with a main board via said connecting means. In a similar manner, in the present embodiment of the invention operating elements, such as push-buttons and switches, can be soldered directly to the main board 14 or can be integrated with the display. To protect the display 11 and generally the interior of the CD/DVD player/recorder against tinkering and soiling, a front cover 12 is secured to the main board 14 in front of the display 11.

The main board 14 also carries a data carrier drive motor 9, the drive shaft of which carries a clamping device for clamping and rotating the disc-shaped optical data carrier 10. The data carrier drive motor 9 is soldered directly onto the main board 14, so that once again there is no need for a connecting lead.

A recess or slot-shaped opening 18, which is defined by inside edges (see reference marks 14c and 14d) of the main board 14, is formed in the main board 14. An optical scanning device 15, called an optical pick-up unit (OPU) in the technical jargon, the bottom portion of which is formed as a carriage, slides in opening 18. The OPU 15 is at the same time carried by the main board 14 and the OPU 15 can move with a translational motion on the main board 14. From this OPU 15, a lens 3 for the laser beam can be seen in the drawing. The remaining portions of the OPU 15 are contained in the housing of the OPU 15 and cannot be seen from the drawing. The OPU 15 has sliding rails 16 on the left and right, which engage with or encircle inner edges 14c of the main board 14 opposite the sliding rails 16 and slide along these inner edges 14c and thus guide the OPU 15. For good electrical and/or thermal connection between the OPU 15 and the main board 14, the sliding rails 16 are made of material with good electrical and/or thermal conductivity and are designed for maximum contact with the main board 14. The electrical connection between OPU 15 and main board 14 via the sliding rails 16 additionally serves for electrical supply of the OPU 15. The good electrical connection between OPU 15 and main board 14 via the sliding rails 17 also serves for improved grounding of OPU 15 on a grounding surface of the main board 14 and thus helps to lessen EMC, EMI and ESD problems. The good thermal connection between OPU 15 and main board 14 also serves for abstracting heat from the OPU 15 to the main board 14, and for this purpose a so-called grounding surface covering a large area is provided for example on the top and/or on the underside of the main board 14, and is connected to an electrical reference potential. In this case the main board 14 also acts as a heat sink for the OPU 15. Control of the OPU 15 takes place via a flat film connection 13 by electronic components mounted on the main board 14.

The OPU 15 is guided in the opening 18 in the main board 14 in such a way that the OPU 15, and especially the lens 3 for the laser beam, can move radially relative to the disc-shaped optical data carrier 10 and can completely scan a read-out zone of the data carrier 10 radially. For translational motion of the OPU 15 the latter is provided with a toothed rack 5 of a suitable length, which engages with the carriage motor 6 soldered on the main board 14. It would of course also be possible to arrange the rack 5 on the main board 14 and the carriage motor 6 on the OPU 15, but that variant has the disadvantages of a large total weight of the OPU 15 and the need for a connecting cable between main board 14 and carriage motor 6.

It should be mentioned that to permit sliding of the OPU 15, it is also possible to provide wheels or rollers or other bearings permitting sliding, for example bearings with a magnetic action.

It should be mentioned that the carriage motor 6 and the drawer drive motor 8 can be combined as a single motor, which can selectively drive either the OPU 15 or the main board 14 via an internal gear mechanism or an internal switching mechanism. Since the OPU 15 and the main board 14 of the CD/DVD player/recorder must never be moved simultaneously during operation, a single motor is sufficient for these purposes. It merely requires some mechanical change-over components, so as to couple either the rack of the OPU 15 or the rack 7 of the main board to the single motor. Change-over of coupling can be effected by a simple solenoid or some other actuator.

The carriage motor 6 and the disc drive motor 8 are produced as conventional motors. They can, however, also be formed by ultra-flat, disc-shaped motors, in which the stator coil and its driving and commutating circuits are soldered on the board directly.

The main board 14 thus replaces the frame for guiding the OPU 15 used in appliances according to the state of the art, giving an appreciable saving of material and costs. Owing to its design as a multilayer board, the main board 14 has the required bending and torsional strength to be able to guide and carry the OPU within the specified tolerances. If necessary the main board 14 is supported on housing 4 via vibration-damping elements, and for example the sliding bearing blocks 16 and the guide rails 7 are of vibration-damping design or can in their turn have vibration-damping bearings.

Fig. 2 shows the drive 20A together with the inserted disc-shaped optical data carrier 10 in its ejected position. Since the components of this drive 20A and their functions have already been described with reference to Fig. 1, further explanation is unnecessary. However, by comparing Figs. 1 and 2 we can clearly see the function of the main board 14 as transporting means for inserting and ejecting the optical data carrier 10.

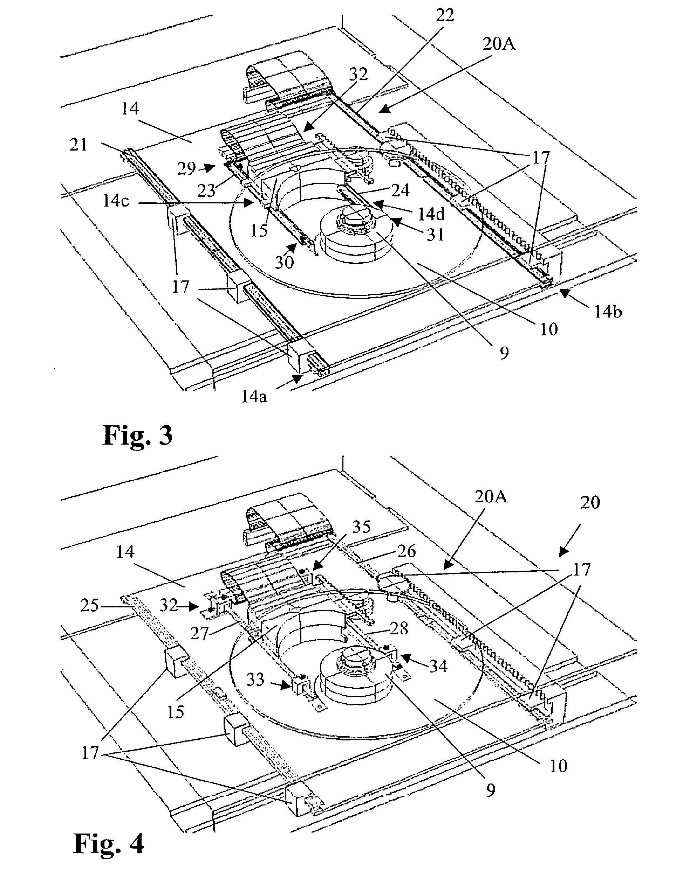

To increase the accuracy of guidance of the main board 14 in the sliding bearings (sliding bearing blocks 17, guide rail 16) and of the OPU 15 on the main board 14, various additional measures can be taken. These measures comprise on the one hand the provision of edge protection on the outer edges 14a, 14b and/or the inner edge 14c, 14d of the main board 14, with this edge protection simultaneously serving as sliding and guiding means. The edge protection can, for example, as shown in Fig. 3, be provided as a U-profile metal sheet 21, 22, 23 and 24 encircling the respective edge of the board 14a and 14b or 14c and 14d. As an alternative to that, the main board 14 is not guided directly in a sliding bearing 17 and/or the OPU 15 is not guided directly on the edges of the main board 14, but in each case a guiding means is provided, which consists of accurately machined metal, for example guide strips or, as shown in Fig. 4, guide bars 25 to 28. These guiding means can be fastened to the main board 14 by pressing-in, snap-fitting, gluing, screwing, soldering or in some other suitable manner. When guide bars 25 to 28 or guide strips are used for sliding bearing of the OPU 15 on the main board 14, the opening 18 in the main board 14 can be omitted and the OPU 15 can be moved over the modules arranged on the main board 14. This has the advantages that the whole area of the main board can be used for placement of modules and that the main board 14 becomes more rigid overall. Guide strips or guide bars 25 to 28 can moreover be provided with adjusting means 29 to 31 or 32 to 35, for precise alignment or positioning or orientation relative to the main board 14, the adjusting means 29 to 35 being fastened to the main board 14. This ensures precise parallel guidance of the main board 14 and/or of the OPU 15.

It should be mentioned that the CE appliance 20 can also be in the form of a portable player or recorder.

It should further be mentioned that an appliance with a drive according to the invention can also be in the form of a desktop computer or a portable computer, and the drive can be in the form of a data drive or as a multimedia-capable drive or as a combination of these two drives.

It should further be mentioned that in a drive according to the invention, the motherboard does not have to be designed only for transporting just one data carrier, but can also be provided and designed for the simultaneous transporting of two or three or more data carriers.

## Claims

1. A drive (20A) for a disc-shaped optical data carrier (10) with a motherboard (14) on which motherboard (14) electronic components for the control of drive functions are arranged, and with a data carrier drive motor (9) for rotating driving of the data carrier (10), and with an optical scanning unit (15) for scanning the data carrier (10), **characterized in that** the motherboard (14) is provided for carrying the optical scanning unit (15) and wherein the optical scanning unit (15) is adjustably supported on the motherboard (14).

2. A drive (20A) according to claim 1, wherein the motherboard (14) has a recess or opening (18) and wherein the optical scanning unit (15) is designed for sliding interaction with opposite board edges (14c, 14d) defining the recess or opening (18), by means of which edges the optical scanning unit (15) is guided in its motion of adjustment.

3. A drive (20A) according to claim 2, wherein the edges of the board (14c, 14d) guiding the optical scanning unit (15) are provided with an edge protection means which edge protection means preferably has a lower resistance to sliding than the board edges (14c, 14d) themselves.

4. A drive (20A) according to claim 3, wherein the edge protection means is in the form of sheet metal (23, 24), preferably in U-profile shape, engaging with or encircling the board edges (14c, 14d).

5. A drive (20A) according to claim 1, wherein the optical scanning unit (15) is mounted with sliding possibility by means of guide bars (27, 28) or guide rails fastened to the motherboard (14).

6. A drive (20A) according to claim 5, wherein the guide bars (27, 28) or guide rails are fastened to the motherboard (14) with possibility of adjustment in inclination and/or alignment.

7. A drive (20A) according to claim 1, wherein scanning unit (15) is connected to the motherboard (14) via a flexible cable or a flexible flat foil (13) that is provided with electrical conductor tracks.

8. A drive (20A) according to claim 1, wherein the optical scanning unit (15) is designed as a carriage with guiding elements (16).

9. A drive (20A) according to claim 8, wherein the guiding elements (16) of the optical scanning unit (15) and the elements of the motherboard (14) connected thereto are made of material having good thermal and/or electrical conductivity.

10. A drive (20A) according to claim 1, wherein the optical scanning unit (15) is provided with a driving means which driving means interacts with a carriage motor (6) arranged on the motherboard (14) for displacing the optical scanning unit (15).

11. A drive (20A) according to claim 10, wherein the carriage motor (6) is selectively useable as a disc drive motor (7) for inserting/ejecting the data carrier (10).

12. A consumer electronics (CE) appliance (20), preferably a CD/DVD player/recorder, wherein the appliance (20) contains a drive (20A) according to one of the claims 1 to 11.

13. A method of carrying, guiding and displacing an optical scanning unit (15) in a drive (20A) for a disc-shaped optical data carrier (10), said drive (20A) comprising a motherboard (14) on which motherboard (14) electronic components for controlling drive functions are arranged, and a data carrier drive motor (9) for rotating driving of the data carrier (10) and the optical scanning unit (15) for scanning the data carrier (10), the method being **characterized in that** the optical scanning unit (15) is carried by means of the motherboard (14) and the optical scanning unit (15) is adjusted on the motherboard (14) and is guided by means of the motherboard (14) in its motion of adjustment.

14. A method according to claim 13, wherein the optical scanning unit (15) is guided along board edges (14c, 14d) that are opposite one another and define a recess or opening (18) in the motherboard (14).

15. A method according to claim 14, wherein the optical scanning unit (15) slides on the board edges (14c, 14d) guiding it, over an edge protection which preferably has a lower resistance to sliding than the board edges (14c, 14d) themselves.

16. A method according to claim 13, wherein the optical scanning unit (15) slides along guide bars (27, 28) or guide rails fastened to the motherboard (14).

17. A method according to claim 13, wherein the optical scanning unit (15) is guided or carried by means of associated carriage-like guide elements (16).

18. A method according to claim 17, wherein heat is abstracted from the optical scanning unit (15) via elements of the motherboard (14) that are connected to the guide elements (16).

19. A method according to claim 13, wherein the optical scanning unit (15) is moved in that a driving means formed thereon is driven by a carriage motor (6) arranged on the motherboard (14).

20. A method according to claim 19, wherein the carriage motor (6) is selectively useable as a disc drive motor (7) for inserting/ejecting the data carrier (10).

## Patentansprüche

1. Laufwerk (20A) für einen scheibenförmigen optischen Datenträger (10) mit einer Hauptplatine (14), auf der elektronische Komponenten für die Steuerung von Laufwerkfunktionen angeordnet sind, und einem Datenträger-Antriebsmotor (9) zum rotierenden Antreiben des Datenträgers (10) sowie mit einer optischen Abtasteinheit (15) zum Abtasten des Datenträgers (10), **dadurch gekennzeichnet, dass** die Hauptplatine (14) vorgesehen ist, um die optische Abtasteinheit (15) zu tragen, wobei die optische Abtasteinheit (15) auf der Hauptplatine (14) einstellbar unterstützt wird.

2. Laufwerk (20A) nach Anspruch 1, bei dem die Hauptplatine (14) eine Aussparung oder Öffnung (18) aufweist und die optische Abtasteinheit (15) für eine gleitende Wechselwirkung mit gegenüberliegenden Platinenkanten (14c, 14d), die die Aussparung oder Öffnung definieren, entworfen ist, wodurch die Kanten der optischen Abtasteinheit (15) bei ihrer Einstellbewegung geführt werden.

3. Laufwerk (20A) nach Anspruch 2, bei dem die Kanten der Platine (14c, 14d), die die optische Abtasteinheit (15) führen, mit Kantenschutzmitteln versehen sind, wobei die Kantenschutzmittel vorzugsweise einen niedrigeren Gleitwiderstand als die Platinenkanten (14c, 14d) selbst haben.

4. Laufwerk (20A) nach Anspruch 3, bei dem die Kantenschutzmittel in Form von Metallblech (23, 24), vorzugsweise in Form eines U-Profils vorliegen und an den Platinenkanten (14c, 14d) in Eingriff sind oder diese umgeben.

5. Laufwerk (20A) nach Anspruch 1, bei dem die optische Abtasteinheit (15) durch an der Hauptplatine (14) befestigte Führungsstäbe (27, 28) oder Führungsschienen mit der Möglichkeit zu gleiten angebracht ist.

6. Laufwerk (20A) nach Anspruch 5, bei dem die Führungsstäbe (27, 28) oder Führungsschienen an der Hauptplatine (14) mit der Möglichkeit des Einstellens von Neigung und/oder Ausrichtung befestigt sind.

7. Laufwerk (20A) nach Anspruch 1, bei dem die Abtasteinheit (15) über ein flexibles Kabel oder eine flexible Flachfolie (13), die mit elektrischen Leiterbahnen versehen ist, mit der Hauptplatine (14) verbunden ist.

8. Laufwerk (20A) nach Anspruch 1, bei dem die Abtasteinheit (15) als ein Schlitten mit Führungselementen (16) entworfen ist.

9. Laufwerk (20A) nach Anspruch 8, bei dem die Führungselemente (16) der optischen Abtasteinheit (15) und die damit verbundenen Elemente der Hauptplatine (14) aus einem Material mit einer guten thermischen und/oder elektrischen Leitfähigkeit hergestellt sind.

10. Laufwerk (20A) nach Anspruch 1, bei dem die optische Abtasteinheit (15) mit Antriebsmitteln versehen ist, die mit einem auf der Hauptplatine (14) angeordneten Schlittenmotor (6) in Wechselwirkung treten, um die optische Abtasteinheit (15) zu verlagern.

11. Laufwerk (20A) nach Anspruch 10, bei dem der Schlittenmotor (6) wahlweise als ein Platten-Antriebsmotor (7) zum Einführen/Auswerfen des Datenträgers (10) verwendet werden kann.

12. Consumer-Electronic-Gerät (CE-Gerät) (20), vorzugsweise ein CD/DVD-Player/Recorder, wobei das Gerät (20) ein Laufwerk (20A) nach einem der Ansprüche 1 bis 11 enthält.

13. Verfahren zum Tragen, Führen und Verlagern einer optischen Abtasteinheit (15) in einem Laufwerk (20A) für einen scheibenförmigen optischen Datenträger (10), wobei das Laufwerk (20A) eine Hauptplatine (14), auf der elektronische Komponenten zum Steuern von Laufwerkfunktionen angeordnet sind, und einen Datenträger-Antriebsmotor (9) zum rotierenden Antreiben des Datenträgers (10) sowie die optische Abtasteinheit (15) zum Abtasten des Datenträgers (10) umfasst, wobei das Verfahren **dadurch gekennzeichnet ist, dass** die optische Abtasteinheit (15) mittels der Hauptplatine (14) getragen wird und die optische Abtasteinheit (15) auf der Hauptplatine (14) eingestellt und bei ihrer Einstellbewegung mittels der Hauptplatine (14) geführt wird.

14. Verfahren nach Anspruch 13, bei dem die optische Abtasteinheit (15) entlang von Platinenkanten (14c, 14d), die einander gegenüberliegen und eine Aussparung oder Öffnung (18) in der Hauptplatine (14) definieren, geführt wird.

15. Verfahren nach Anspruch 14, bei dem die optische Abtasteinheit (15) auf den Platinenkanten (14c, 14d) gleitet, die sie über einen Kantenschutz führen, der vorzugsweise einen niedrigeren Gleitwiderstand als die Platinenkanten (14c, 14d) selbst hat.

16. Verfahren nach Anspruch 13, bei dem die optische Abtasteinheit (15) entlang von an der Hauptplatine (14) befestigten Führungsstäben (27, 28) oder Führungsschienen gleitet.

17. Verfahren nach Anspruch 13, bei dem die optische Abtasteinheit (15) mit Hilfe zugehöriger schlittenähnlicher Führungselemente (16) geführt oder getragen wird.

18. Verfahren nach Anspruch 17, bei dem Wärme von der optischen Abtasteinheit (15) über Elemente der Hauptplatine (14), die mit den Führungselementen (16) verbunden sind, abgeleitet wird.

19. Verfahren nach Anspruch 13, bei dem die optische Abtasteinheit (15) **dadurch** bewegt wird, dass darauf ausgebildete Antriebsmittel durch einen auf der Hauptplatine (14) angeordneten Schlittenmotor (6) angetrieben werden.

20. Verfahren nach Anspruch 19, bei dem der Schlittenmotor (6) wahlweise als ein Platten-Antriebsmotor (7) zum Einführen/Auswerfen des Datenträgers (10) verwendet werden kann.

## Revendications

1. Lecteur (20A) pour un support de données optiques en forme de disque (10) avec une carte principale (14), sur laquelle carte principale (14) des composants électroniques pour commander des fonctions de lecteur sont disposés, avec un moteur d'entraînement de support de données (9) pour entraîner le support de données (10) en rotation, avec une unité de lecture optique (15) pour balayer le support de données (10), **caractérisé en ce que** la carte principale (14) est disposée pour supporter l'unité de lecture optique (15), et dans lequel l'unité de lecture optique (15) est maintenue sur la carte principale (14) d'une façon qui peut être ajustée.

2. Lecteur (20A) selon la revendication 1, dans lequel la carte principale (14) a un creux ou ouverture (18), et dans lequel l'unité de lecture optique (15) est disposée pour une interaction glissante, avec des bords opposés de carte (14c, 14d) qui définissent le creux ou ouverture (18), par le moyen desquels bords l'unité de lecture optique (15) est guidée dans son déplacement d'ajustement.

3. Lecteur (20A) selon la revendication 2, dans lequel les bords de la carte (14c, 14d) qui guident l'unité de lecture optique (15) sont pourvus d'un moyen de protection de bord, lequel moyen de protection de bord a de préférence une résistance au glissement plus faible que les bords de carte (14c, 14d) eux-mêmes.

4. Lecteur (20A) selon la revendication 3, dans lequel le moyen de protection de bord est dans la forme d'une feuille de métal (23, 24), de préférence en forme de profil en U, se mettant en prise avec les bords de carte (14c, 14d) ou entourant ceux-ci.

5. Lecteur (20A) selon la revendication 1, dans lequel l'unité de lecture optique (15) est montée avec une possibilité de glissement par le moyen de barres de guidage (27, 28) ou rails de guidage fixés à la carte principale (14).

6. Lecteur (20A) selon la revendication 5, dans lequel les barres de guidage (27, 28) ou rails de guidage sont fixés à la carte principale (14) avec une possibilité de réglage en inclinaison et / ou en alignement.

7. Lecteur (20A) selon la revendication 1, dans lequel l'unité de lecture (15) est connectée à la carte principale (14) via un câble flexible ou un film plat flexible (13) qui est pourvu de pistes conductrices de l'électricité.

8. Lecteur (20A) selon la revendication 1, dans lequel l'unité de lecture optique (15) est conçue comme un chariot avec des éléments de guidage (16).

9. Lecteur (20A) selon la revendication 8, dans lequel les éléments de guidage (16) du lecteur optique (15) et les éléments de la carte principale (14) qui y sont raccordés sont faits en un matériau qui a une bonne conductibilité thermique et / ou une bonne conductivité électrique.

10. Lecteur (20A) selon la revendication 1, dans lequel l'unité de lecture optique (15) est pourvue d'un moyen d'entraînement, lequel moyen d'entraînement interagit avec un moteur de chariot (6) disposé sur la carte principale (14) pour déplacer l'unité de lecture optique (15).

11. Lecteur (20A) selon la revendication 10, dans lequel le moteur de chariot (6) peut être utilisé de façon sélective comme moteur d'entraînement du disque (7) pour insérer / éjecter le support de données (10).

12. Appareil électronique grand public (CE) (20), de préférence un lecteur /enregistreur de CD / DVD, dans lequel l'appareil (20) contient un lecteur (20A) selon une des revendications 1 à 11.

13. Procédé pour supporter, guider et déplacer une unité de lecture optique (15) dans un lecteur (20A) pour un support de données optiques en forme de disque (10), ledit lecteur (20A) comprenant une carte principale (14) sur laquelle carte principale (14) sont disposés des composants électroniques pour commander des fonctions de lecteur, un moteur d'entraînement de support de données (9) pour entraîner le support de données (10) en rotation, et l'unité de lecture optique (15) pour balayer le support de données (10), le procédé étant **caractérisé en ce que** l'unité de lecture optique (15) est portée par le moyen de la carte principale (14), et l'unité de lecture optique (15) est ajustée sur la carte principale (14) et est guidée par le moyen de la carte principale (14) dans son déplacement d'ajustement.

14. Procédé selon la revendication 13, dans lequel l'unité de lecture optique (15) est guidée le long de bords de carte (14c, 14d) qui sont opposés l'un à l'autre et définissent un creux ou ouverture (18) dans la carte principale (14).

15. Procédé selon la revendication 14, dans lequel l'unité de lecture optique (15) glisse sur les bords de carte (14c, 14d) qui la guident, sur une protection de bord qui de préférence a une résistance au glissement inférieure à celle des bords de carte (14c, 14d) eux-mêmes.

16. Procédé selon la revendication 13, dans lequel l'unité de lecture optique (15) glisse le long de barres de guidage (27, 28) ou rails de guidage fixés à la carte principale (14).

17. Procédé selon la revendication 13, dans lequel l'unité de lecture optique (15) est guidée ou portée par le moyen d'éléments de guidage (16) de type chariot associés.

18. Procédé selon la revendication 17, dans lequel de la chaleur est extraite de l'unité de lecture optique (15) via des éléments de la carte principale (14) qui sont raccordés aux éléments de guidage (16).

19. Procédé selon la revendication 13, dans lequel l'unité de lecture optique (15) est déplacée, en ce qu'un moyen d'entraînement qui y est formé est entraîné par un moteur de chariot (6) disposé sur la carte principale (14).

20. Procédé selon la revendication 19, dans lequel le moteur de chariot (6) peut être utilisé de façon sélective comme un moteur d'entraînement de disque (7) pour insérer / éjecter le support de données (10).
